# EUROPEAN PATENT APPLICATION

(11) **EP 4 084 531 A1**
(43) Date of publication of application: **02.11.2022**
(21) Application number: 20906676.0
(22) Date of filing: 25.12.2020
(51) Int. Cl.: H04W 40/12

(54) **PATH SELECTION METHOD, TERMINAL, AND NETWORK SIDE DEVICE**

(30) Priority: 25.12.2019 CN 201911360714
(71) Applicant: Vivo Mobile Communication Co., Ltd., Dongguan, Guangdong 523863 (CN)
(72) Inventor: WANG, Wen, Dongguan, Guangdong 523863 (CN); XIE, Zhenhua, Dongguan, Guangdong 523863 (CN)
(74) Representative: Raffay & Fleck
(86) International application number: PCT/CN2020/139387
(87) International publication number: WO 2021/129804

(57) **Abstract**

The present invention provides a path selection method, a terminal, and a network side device, wherein a terminal side method comprises: sending a path selection request to a network side device; receiving response information sent from the network side device; in the event that the response information comprises relay path indication information, using a target relay node to perform a first transmission, wherein the relay path indication information comprises target relay node identification information or backup relay node configuration information, the target relay node being a relay node among the backup relay nodes having configuration information that matches a transmission parameter of the first transmission.

## Description

### CROSS-REFERENCE TO RELATED APPLICATIONS

This application claims priority to Chinese Patent Application No. 201911360714.2, filed in China on December 25, 2019, which is incorporated herein by reference in its entirety.

### TECHNICAL FIELD

The present disclosure relates to the field of communications technologies, and in particular, to a path selection method, a terminal, and a network-side device.

### BACKGROUND

In a relay (Relay) technology, one or more relay nodes are disposed between a network-side device and a terminal. The terminal may select one or more of the relay nodes to perform communication and transmission, or the terminal may select a direct path to perform communication and transmission. Currently, the terminal generally selects a path based on link quality. A relay node with good link quality may be selected by the terminal to perform transmission. However, with extension of service types of the terminal, the selected path may not meet a service requirement if only the link quality is considered. Therefore, the conventional path selection manner cannot meet a service requirement.

### SUMMARY

Embodiments of the present disclosure provide a path selection method, a terminal, and a network-side device, to resolve a problem that a conventional path selection manner cannot meet a service requirement.

To resolve the foregoing technical problem, the present disclosure is implemented as follows:

According to a first aspect, an embodiment of the present disclosure provides a path selection method, applied to a terminal, where the method includes:
transmitting a path selection request to a network-side device, where the path selection request includes identification information of a candidate relay node;
receiving a response message transmitted by the network-side device; and
in a case that the response message includes relay path indication information, using a target relay node to perform first transmission, where the relay path indication information includes identification information of the target relay node or configuration information of the candidate relay node, and the target relay node is a relay node, in the candidate relay node, whose configuration information matches a transmission parameter of the first transmission.

According to a second aspect, an embodiment of the present disclosure provides a path selection method, applied to a network-side device, where the method includes:
receiving a path selection request transmitted by a terminal, where the path selection request includes identification information of a candidate relay node; and
transmitting a response message to the terminal, where the response message includes relay path indication information, the relay path indication information includes identification information of a target relay node or configuration information of the candidate relay node, and the target relay node is a relay node, in the candidate relay node, whose configuration information matches a transmission parameter used by the terminal to perform first transmission; or the response message does not include the relay path indication information.

According to a third aspect, an embodiment of the present disclosure provides a terminal, including:
a transmitting module, configured to transmit a path selection request to a network-side device, where the path selection request includes identification information of a candidate relay node;
a receiving module, configured to receive a response message transmitted by the network-side device; and
a first path selection module, configured to: in a case that the response message includes relay path indication information, use a target relay node to perform first transmission, where the relay path indication information includes identification information of the target relay node or configuration information of the candidate relay node, and the target relay node is a relay node, in the candidate relay node, whose configuration information matches a transmission parameter of the first transmission.

According to a fourth aspect, an embodiment of the present disclosure provides a network-side device, including:
a receiving module, configured to receive a path selection request transmitted by a terminal, where the path selection request includes identification information of a candidate relay node; and
a transmitting module, configured to transmit a response message to the terminal, where the response message includes relay path indication information, the relay path indication information includes identification information of a target relay node or configuration information of the candidate relay node, and the target relay node is a relay node, in the candidate relay node, whose configuration information matches a transmission parameter used by the terminal to perform first transmission; or the response message does not include the relay path indication information.

According to a fifth aspect, an embodiment of the present disclosure provides a terminal, including a memory, a processor, and a computer program stored in the memory and capable of running on the processor, where when the computer program is executed by the processor, the steps of the path selection method according to the first aspect of the embodiments of the present disclosure are implemented.

According to a sixth aspect, an embodiment of the present disclosure provides a network-side device, including a memory, a processor, and a computer program stored in the memory and capable of running on the processor, where when the computer program is executed by the processor, the steps of the path selection method according to the second aspect of the embodiments of the present disclosure are implemented.

According to a seventh aspect, an embodiment of the present disclosure provides a computer-readable storage medium, where the computer-readable storage medium stores a computer program, and when the computer program is executed by a processor, the steps of the path selection method according to the first aspect of the embodiments of the present disclosure are implemented.

According to an eighth aspect, an embodiment of the present disclosure provides a computer-readable storage medium, where the computer-readable storage medium stores a computer program, and when the computer program is executed by a processor, the steps of the path selection method according to the second aspect of the embodiments of the present disclosure are implemented.

In the embodiments of the present disclosure, a terminal may transmit a path selection request to a network-side device after discovering a candidate relay node, and the network-side device may feed back a response message to the terminal after receiving the path selection request, to assist the terminal in path selection. In this way, with the assistance of the network-side device, a path selected by the terminal can better meet a transmission requirement, namely, a service requirement, thereby improving applicability of path selection.

### BRIEF DESCRIPTION OF DRAWINGS

To describe the technical solutions in the embodiments of the present disclosure more clearly, the following briefly describes the accompanying drawings required for describing the embodiments of the present disclosure. Apparently, the accompanying drawings in the following description show merely some embodiments of the present disclosure, and a person of ordinary skill in the art may still derive other drawings from these accompanying drawings without creative efforts.
FIG. 1 is a schematic diagram of a relay node discovery process;
FIG. 2 is a schematic diagram of another relay node discovery process;
FIG. 3 is a structural diagram of a network system according to an embodiment of the present disclosure;
FIG. 4 is a flowchart of a path selection method applied to a network system according to an embodiment of the present disclosure;
FIG. 5 is a flowchart of a path selection method applied to a terminal according to an embodiment of the present disclosure;
FIG. 6 is a flowchart of a path selection method applied to a network-side device according to an embodiment of the present disclosure;
FIG. 7 is a schematic structural diagram of a terminal according to an embodiment of the present disclosure;
FIG. 8 is a schematic structural diagram of a network-side device according to an embodiment of the present disclosure;
FIG. 9 is a schematic diagram of a hardware structure of a terminal according to an embodiment of the present disclosure; and
FIG. 10 is a schematic diagram of a hardware structure of a network-side device according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

In the specification and claims of this application, the terms "including", and any other variants mean to cover a non-exclusive inclusion. For example, a process, method, system, product, or device that includes a list of steps or units is not necessarily limited to those steps or units, but may include other steps or units not expressly listed or inherent to such a process, method, product, or device. In addition, the term "and/or" used in the specification and claims indicates at least one of connected objects. For example, "A and/or B" represents the following three cases: Only A exists, only B exists, and both A and B exist.

In the embodiments of the present disclosure, the word such as "example" or "for example" is used to represent giving an example, an instance, or an illustration. Any embodiment or design solution described as "an example" or "for example" in the embodiments of the present disclosure shall not be interpreted to be more preferential or advantageous than other embodiments or design solutions. Specifically, the terms such as "an example" or "for example" are used to present related concepts in a specific manner.

Before the technical solutions in the embodiments of the present disclosure are described in detail, a relay technology is briefly described.

In a relay technology in a wireless communications system, one or more relay nodes are added between a network-side device and a terminal. The relay nodes may be configured to forward a radio signal. In this case, the radio signal needs to undergo a plurality of hops before reaching the terminal.

Simple two-hop relay is used as an example. In wireless relay, a link from a network-side device to a terminal is split into a link from the network-side device to a relay station and a link from the relay station to the terminal. In this way, it is possible to replace a link with poor quality with two links with good quality, to obtain a higher link capacity and better coverage.

It can be learned that the relay technology not only can be used to expand cell coverage to compensate for a blind spot in cell coverage, but also can increase a cell capacity through spatial resource multiplexing. For indoor coverage, the relay technology can also overcome penetration loss and improve indoor coverage quality.

Currently, relay supported in LTE or NR is UE-to-network relay. To be specific, one end of a relay node is connected to a terminal, and the other end of the relay node is connected to a network-side device. For ease of understanding, the relay node may be denoted as relay UE, and the terminal connected to the relay UE may be denoted as remote UE.

In the UE-to-network relay, before a relay connection is established, the remote UE may search for or discover available relay UE in two manners.

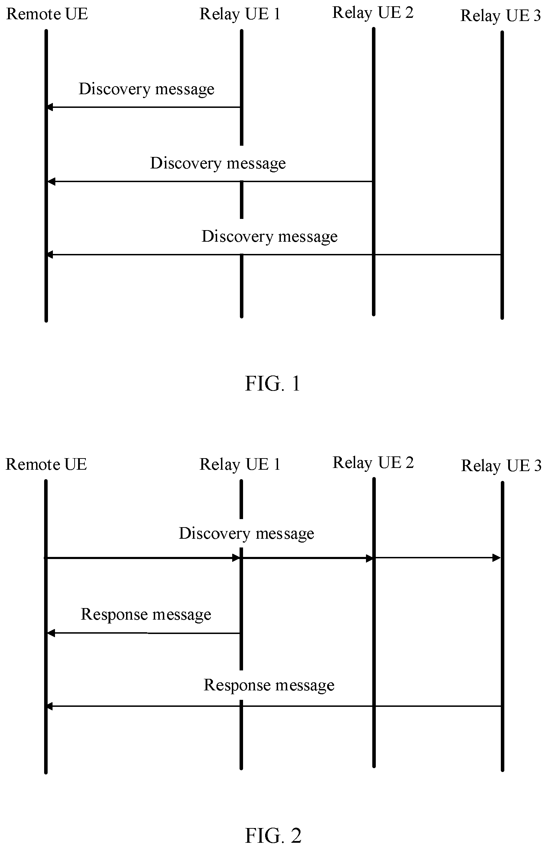

Manner 1: As shown in FIG. 1, for a ProSe service, if the relay UE expects a nearby terminal to be able to establish its own UE-to-network relay connection, the relay UE may broadcast a discovery (Announcement) message to claim that the relay UE is relay UE that can perform UE-to-network relay for the service. In FIG. 1, relay UE 1, relay UE 2, and relay UE 3 are all available relay UEs. A relay UE discovery process shown in FIG. 1 may also be called a Mode A discovery process.

Manner 2: As shown in FIG. 2, for a ProSe service, if the remote UE expects to establish a UE-to-network relay connection by using nearby relay UE, the remote UE broadcasts a discovery (Solicitation) message used to discover nearby relay UE. If the nearby relay UE performs authorization and is willing to establish a UE-to-network relay connection for the remote UE, the nearby relay UE returns response message information to the remote UE. In FIG. 2, relay UE 2 and relay UE 3 are both available relay UEs. A relay UE discovery process shown in FIG. 2 may also be called a Mode B discovery process.

In the embodiments of the present disclosure, for ease of understanding, the available relay UE may be collectively referred to as a candidate relay node.

There may be a plurality of available relay UEs, that is, there are a plurality of candidate relay nodes. Therefore, the remote UE encounters a problem of UE-to-network relay selection, that is, the remote UE needs to select a transmission path.

Currently, the remote UE selects relay UE typically based on link quality, for example, a reference signal received power (Reference Signal Received Power, RSRP). Relay UE with good link quality may be selected by the remote UE to perform transmission. However, with extension of service types of a terminal, a selected path may not meet a service requirement if only link quality is considered. For example, in LTE, the foregoing relay technology is generally applicable to a public safety service. However, in an NR ProSe, a commercial service is incorporated in ProSe communication. If a terminal needs to transmit a commercial service by using the relay technology, the terminal needs to consider whether a configuration parameter of selected relay UE meets requirements of transmission parameters of the service, for example, quality of service (Quality of Service, QoS), network slice selection assistance information (Network Slice Selection Assistance Information, NSSAI), session and service continuity mode (Session and Service Continuity Mode, SSC Mode), and data network name (Data Network Name, DNN). Therefore, the conventional relay UE selection manner applicable to LTE may no longer be applicable to the commercial service in the NR ProSe communication.

However, the configuration parameter of the relay UE may be private data of the relay UE, and the remote UE may be unable to obtain the configuration parameter of the relay UE. Therefore, the remote UE may need assistance of the network-side device to select appropriate relay UE.

In view of this, to resolve the foregoing problem, the embodiments of the present disclosure provide a path selection method, a terminal, and a network-side device.

The following describes the embodiments of the present disclosure with reference to the accompanying drawings. The embodiments provided in the present disclosure may be applied to a wireless communications system. The wireless communications system may be a 5G system, or an evolved long term evolution (Evolved Long Term Evolution, eLTE) system, or a later evolved communications system.

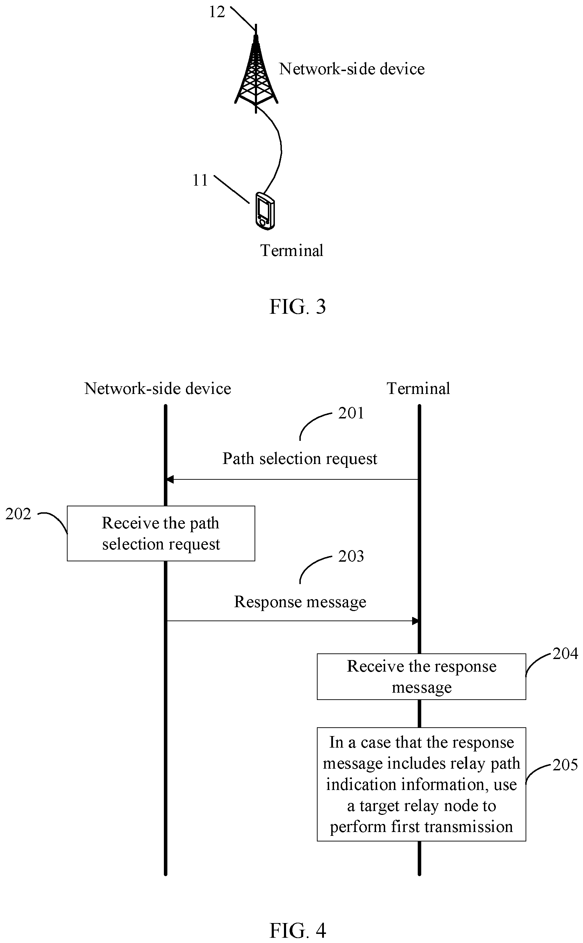

FIG. 3 is a structural diagram of a network system according to an embodiment of the present disclosure. As shown in FIG. 3, the network system includes a terminal 11 and a network-side device 12. The terminal 11 may be a mobile communications device, for example, a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device). It should be noted that a specific type of the terminal 11 is not limited in this embodiment of the present disclosure. The network-side device 12 may be a 5G network-side device (for example, a gNB or a 5G NR NB), a 4G network-side device (for example, an eNB), a 3G network-side device (for example, an NB), a network-side device in a later evolved communications system, or the like. It should be noted that a specific type of the network-side device 12 is not limited in this embodiment of the present disclosure.

FIG. 4 is a flowchart of a path selection method applied to the network system shown in FIG. 3 according to an embodiment of the present disclosure. As shown in FIG. 4, the method includes the following steps.

Step 201: A terminal transmits a path selection request to a network-side device.

The path selection request includes identification information of a candidate relay node.

The terminal may be understood as the foregoing remote UE. The candidate relay node may be understood as the foregoing relay UE. The identification information of the candidate relay node may be understood as identification information of the relay UE, for example, a user ID of the relay UE, such as relay UE 1 or relay UE 2.

The candidate relay node may be discovered by the terminal in the manner shown in FIG. 1 or FIG. 2. To be specific, the terminal may discover the candidate relay node by using the Mode A discovery process, or may discover the candidate relay node by using the Mode B discovery process.

An occasion at which the terminal transmits the path selection request to the network-side device may be before the terminal performs first transmission. In other words, in a case that the terminal needs to perform the first transmission, the terminal transmits the path selection request to the network-side device. Herein, the first transmission may be understood as any transmission in which a relay technology can be used, for example, the foregoing commercial service or public safety service.

Step 202: The network-side device receives the path selection request transmitted by the terminal.

Step 203: The network-side device transmits a response message to the terminal.

The response message includes relay path indication information. The relay path indication information includes identification information of a target relay node or configuration information of the candidate relay node. The target relay node is a relay node, in the candidate relay node, whose configuration information matches a transmission parameter used by the terminal to perform the first transmission. Alternatively, the response message does not include the relay path indication information.

After receiving the path selection request transmitted by the terminal, the network-side device may obtain identification information of each candidate relay node based on the path selection request, to further obtain configuration information of each candidate relay node.

In this embodiment of the present disclosure, the network-side device may feed back the obtained configuration information of the candidate relay node to the terminal by using the response message. In this way, after obtaining the configuration information of the candidate relay node, the terminal may screen the candidate relay node to select a relay node applicable to the first transmission. In this embodiment of the present disclosure, the path selection request includes the identification information of the candidate relay node, and may further include the transmission parameter used by the terminal to perform the first transmission. In a case that the path selection request includes the transmission parameter of the first transmission, relay node selection may be performed by the terminal, or relay node selection may be performed by the network-side device. If the network-side device performs relay node selection, the network-side device may screen the candidate relay node based on the obtained configuration information of the candidate relay node, to select a relay node applicable to the first transmission, and feed back the relay node to the terminal by using the response message.

Regardless of which of the foregoing manners is used, it can be understood that the response message transmitted by the network-side device includes the relay path indication information. The relay path indication information includes the identification information of the target relay node or the configuration information of the candidate relay node. Herein, the target relay node may be understood as a relay node that is finally used by the terminal to perform the first transmission.

Step 204: The terminal receives the response message transmitted by the network-side device.

Step 205: In a case that the response message includes the relay path indication information, the terminal uses the target relay node to perform the first transmission.

Optionally, in a case that the response message does not include the relay path indication information, the terminal uses a direct path to perform the first transmission.

In this implementation, after the network-side device screens all candidate relay nodes, if configuration information of none of the candidate relay nodes meets the transmission parameter of the first transmission, the response message fed back by the network-side device does not include the relay path indication information. Alternatively, the response message fed back by the network-side device may further include direct path indication information.

To sum up, in this embodiment of the present disclosure, relay node selection may be performed by either the terminal or the network-side device. A selection principle is that configuration information of a selected relay node can meet the transmission parameter of the first transmission. Otherwise, the terminal does not perform the first transmission through a relay path, but performs the first transmission through a direct path.

In this embodiment of the present disclosure, the terminal may transmit the path selection request to the network-side device after discovering the candidate relay node, and the network-side device may feed back the response message to the terminal after receiving the path selection request, to assist the terminal in path selection. In this way, with the assistance of the network-side device, a path selected by the terminal can better meet a transmission requirement, namely, a service requirement, thereby improving applicability of path selection.

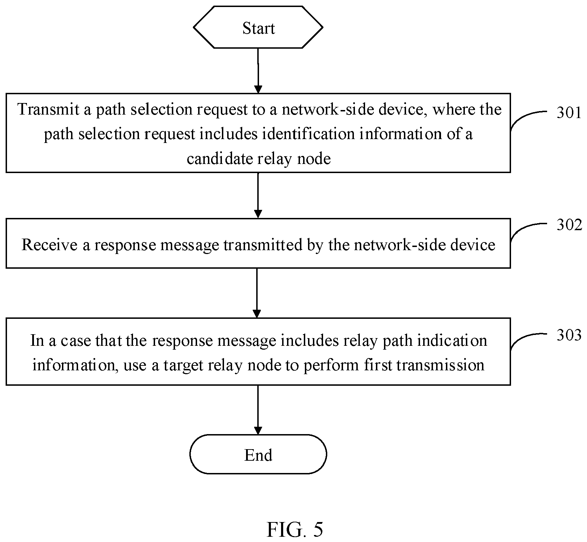

FIG. 5 is a flowchart of a path selection method applied to a terminal according to an embodiment of the present disclosure. As shown in FIG. 5, the path selection method is applied to a terminal, and the method includes the following steps.

Step 301: Transmit a path selection request to a network-side device, where the path selection request includes identification information of a candidate relay node.

The path selection request may be transmitted to the network-side device by using a non-access stratum (Non-Access Stratum, NAS) message, for example, a registration request or a service request.

Step 302: Receive a response message transmitted by the network-side device.

Step 303: In a case that the response message includes relay path indication information, use a target relay node to perform first transmission.

The relay path indication information includes identification information of the target relay node or configuration information of the candidate relay node. The target relay node is a relay node, in the candidate relay node, whose configuration information matches a transmission parameter of the first transmission.

In this embodiment of the present disclosure, the configuration information of the candidate relay node may include at least one of QoS information supported by the candidate relay node, load information of a network to which the candidate relay node belongs, NSSAI of a network to which the candidate relay node belongs, an SSC mode of a network to which the candidate relay node belongs, information about a protocol data unit (Protocol Data Unit, PDU) session that the candidate relay node has established, and moving track information of the candidate relay node. The transmission parameter of the first transmission may include at least one of an identifier of the first transmission, QoS required for the first transmission, NSSAI of the first transmission, an SSC mode of the first transmission, and a DNN of the first transmission.

The QoS information may include parameters such as a data rate, a PDB (packet delay budget), and a packet error rate (Packet Error Rate, PER). The information about the PDU session that the relay node has established may include information about a relay PDU session that the relay node has established, the number of PDU sessions, and the like.

In this embodiment of the present disclosure, the terminal may transmit the path selection request to the network-side device after discovering the candidate relay node, and the network-side device may feed back the response message to the terminal after receiving the path selection request, to assist the terminal in path selection. In this way, with the assistance of the network-side device, a path selected by the terminal can better meet a transmission requirement, namely, a service requirement, thereby improving applicability of path selection.

Optionally, the relay path indication information includes the configuration information of the candidate relay node, and the target relay node is a relay node selected by the terminal from the candidate relay node based on the configuration information of the candidate relay node and the transmission parameter of the first transmission.

In this implementation, relay node selection is performed by the terminal. Because the terminal can obtain the transmission parameter of the first transmission, the terminal needs to further obtain configuration information of each candidate relay node. The configuration information of each candidate relay node may be fed back by the network-side device to the terminal, that is, the response message transmitted by the network-side device includes the configuration information of the candidate relay node.

To better understand this implementation, the following describes in detail a selection process of the terminal by using a specific example.

Example 1: In a case that the terminal needs to perform first transmission, the terminal transmits a path selection request to the network-side device, where the path selection request includes identification information of a candidate relay node. The network-side device receives the path selection request transmitted by the terminal. The network-side device transmits configuration information of the candidate relay node to the terminal based on the path selection request. The terminal receives the configuration information of the candidate relay node that is transmitted by the network-side device. The terminal selects a target relay node from the candidate relay node based on a transmission parameter of the first transmission and the configuration information of the candidate relay node, to perform the first transmission.

Optionally, the path selection request further includes the transmission parameter of the first transmission; and
the configuration information of the candidate relay node is determined by the network-side device based on the transmission parameter of the first transmission.

There may be a plurality of types of configuration information of the candidate relay node. There may also be a plurality of transmission parameters, and transmission parameters concerned by different transmission services may be different. Therefore, the terminal may add the transmission parameter of the first transmission to the path selection request, and the network-side device may determine, based on the transmission parameter of the first transmission, the configuration information of the candidate relay node that needs to be fed back to the terminal.

The configuration information of the candidate relay node is determined in the foregoing manner, so that the configuration information fed back by the network-side device is more targeted, and communication resources that are required to be consumed when the terminal selects a relay node can be reduced. In addition, the network-side device does not need to feed back additional information either, thereby helping reduce communication resources that are required to be consumed by the network-side device.

Optionally, the path selection request further includes the transmission parameter of the first transmission; and
the relay path indication information includes the identification information of the target relay node, and the target relay node is a relay node selected by the network-side device from the candidate relay node based on the configuration information of the candidate relay node and the transmission parameter of the first transmission.

In this implementation, relay node selection is performed by the network-side device. Because the network-side device can obtain the transmission parameter of the first transmission, the network-side device may select, from the candidate relay node based on the configuration information of each candidate relay node and the transmission parameter of the first transmission, a relay node that can meet the first transmission, and feed back identification information of the relay node to the terminal by using the response message.

To better understand this implementation, the following describes in detail a selection process of the network-side device by using a specific example.

Example 2: In a case that the terminal needs to perform first transmission, the terminal transmits a path selection request to the network-side device, where the path selection request includes identification information of a candidate relay node and a transmission parameter of the first transmission. The network-side device receives the path selection request transmitted by the terminal. The network-side device selects, from the candidate relay node based on the path selection request, a relay node that meets the first transmission, and transmits identification information of the relay node to the terminal. The terminal receives the identification information of the relay node that is transmitted by the network-side device, and selects a target relay node from the relay node to perform the first transmission.

Optionally, if the number of relay nodes, in the candidate relay node, whose configuration information matches the transmission parameter of the first transmission is greater than 1, the relay path indication information includes:
identification information of a relay node that meets a preset condition among the relay nodes whose configuration information matches the transmission parameter of the first transmission, where the target relay node is the relay node that meets the preset condition; or
an identification information list of the relay nodes whose configuration information matches the transmission parameter of the first transmission, where sorting of the identification information list matches a configuration priority sequence of the relay nodes, and the target relay node is a relay node selected by the terminal based on the sorting of the identification information list.

The configuration information may be understood as the foregoing configuration information, and may include at least one of QoS information, load information, NSSAI, an SSC mode, information about a PDU session that has been established, and moving track information.

In this implementation, when the number of relay nodes, in the candidate relay node, that meet the first transmission is greater than 1, the network-side device may select, from the relay nodes, a relay node that meets a preset condition as the target relay node used by the terminal to perform the first transmission. Herein, the relay node that meets the preset condition may be an optimal relay node determined by the network-side device, that is, an optimal path determined by the network-side device, for example, a relay node, in the candidate relay node, that has optimal QoS, or a relay node, in the candidate relay node, whose moving track is closest to that of the terminal.

The network-side device may further provide the identification information list. In the list, the relay nodes that meet the first transmission are sorted based on the configuration priority sequence of the relay nodes. For example, the relay nodes that meet the first transmission are sorted in descending order of configuration priorities of the relay nodes. The terminal may sequentially establish relay connections to the relay nodes in descending order of priorities. If a relay node does not meet a requirement, the terminal then selects a relay node with a lower priority, until a relay connection is successful. If none of the relay nodes in the identification information list meets the requirement, the terminal may select a direct path to perform the first transmission.

Optionally, the method further includes:
in a case that the response message does not include the relay path indication information, using a direct path to perform the first transmission.

In this implementation, after the network-side device screens all candidate relay nodes, if configuration information of none of the candidate relay nodes meets the transmission parameter of the first transmission, the response message fed back by the network-side device does not include the relay path indication information. Herein, the terminal may use the direct path to perform the first transmission.

It should be noted that, if the response message does not include the relay path indication information, the terminal may subsequently use the direct path to perform the first transmission, or may select a path in another manner to perform relay transmission. This is not limited in this embodiment of the present disclosure.

Optionally, the using, in a case that the response message does not include the relay path indication information, a direct path to perform the first transmission includes:
in a case that the response message does not include the relay path indication information but includes direct path indication information, using the direct path to perform the first transmission.

In this implementation, after the network-side device screens all candidate relay nodes, if configuration information of none of the candidate relay nodes meets the transmission parameter of the first transmission, the network-side device may feed back an empty response message. To be specific, the response message includes neither the relay path indication information nor the direct path indication information. Alternatively, further, the response message fed back by the network-side device does not include the relay path indication information, but may include the direct path indication information. The foregoing cases indicate that none of the candidate relay node can meet the transmission parameter of the first transmission. In this case, the terminal may use the direct path to perform the first transmission.

To sum up, in this embodiment of the present disclosure, relay node selection may be performed by either the terminal or the network-side device. A selection principle is that configuration information of a selected relay node can meet the transmission parameter of the first transmission. Otherwise, the terminal does not perform the first transmission through a relay path, but performs the first transmission through a direct path.

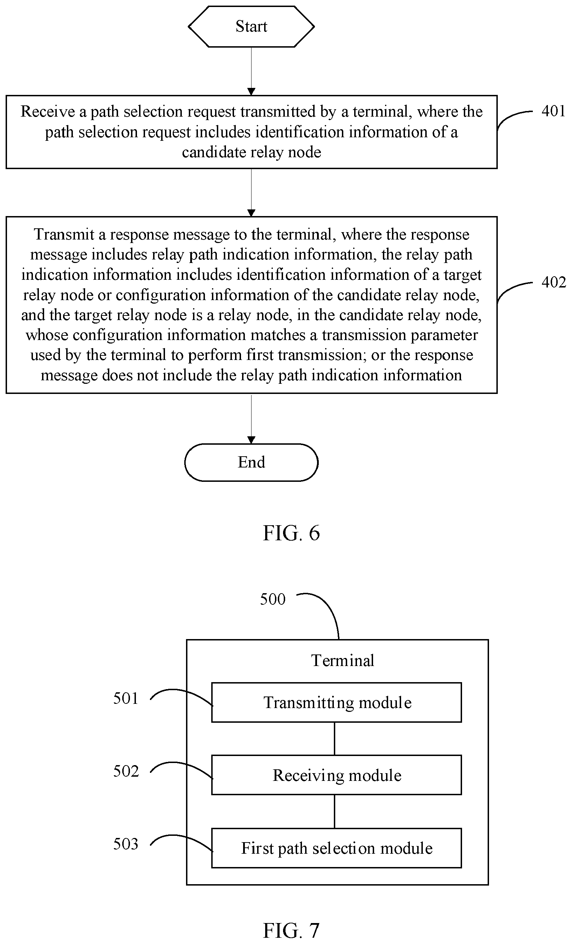

FIG. 6 is a flowchart of a path selection method applied to a network-side device according to an embodiment of the present disclosure. As shown in FIG. 6, the path selection method is applied to a network-side device, and the method includes the following steps.

Step 401: Receive a path selection request transmitted by a terminal, where the path selection request includes identification information of a candidate relay node.

Step 402: Transmit a response message to the terminal, where the response message includes relay path indication information, the relay path indication information includes identification information of a target relay node or configuration information of the candidate relay node, and the target relay node is a relay node, in the candidate relay node, whose configuration information matches a transmission parameter used by the terminal to perform first transmission; or the response message does not include the relay path indication information.

Optionally, in a case that configuration information of none of the candidate relay node meets the transmission parameter of the first transmission, the response message does not include the relay path indication information.

Optionally, in a case that the response message does not include the relay path indication information, the response message further includes direct path indication information.

Optionally, the relay path indication information includes the configuration information of the candidate relay node, and the target relay node is a relay node selected by the terminal from the candidate relay node based on the configuration information of the candidate relay node and the transmission parameter of the first transmission.

Optionally, the path selection request further includes the transmission parameter of the first transmission; and
the configuration information of the candidate relay node is determined by the network-side device based on the transmission parameter of the first transmission.

Optionally, the path selection request further includes the transmission parameter of the first transmission; and
the relay path indication information includes the identification information of the target relay node, and the target relay node is a relay node selected by the network-side device from the candidate relay node based on the configuration information of the candidate relay node and the transmission parameter of the first transmission.

Optionally, if the number of relay nodes, in the candidate relay node, whose configuration information matches the transmission parameter of the first transmission is greater than 1, the relay path indication information includes:
identification information of a relay node that meets a preset condition among the relay nodes whose configuration information matches the transmission parameter of the first transmission, where the target relay node is the relay node that meets the preset condition; or
an identification information list of the relay nodes whose configuration information matches the transmission parameter of the first transmission, where sorting of the identification information list matches a configuration priority sequence of the relay nodes, and the target relay node is a relay node selected by the terminal based on the sorting of the identification information list.

Optionally, the configuration information of the candidate relay node includes at least one of the following:
quality of service QoS information supported by the candidate relay node;
load information of a network to which the candidate relay node belongs;
network slice selection assistance information NSSAI of a network to which the candidate relay node belongs;
a session and service continuity SSC mode of a network to which the candidate relay node belongs;
information about a protocol data unit PDU session that the candidate relay node has established; and
moving track information of the candidate relay node.

Optionally, the transmission parameter of the first transmission includes at least one of the following:
an identifier of the first transmission;
QoS required for the first transmission;
NSSAI of the first transmission;
an SSC mode of the first transmission; and
a data network name DNN of the first transmission.

It should be noted that this embodiment of the present disclosure is an embodiment of the network-side device corresponding to the embodiments shown in FIG. 4 and FIG. 5. For specific implementations of this embodiment of the present disclosure, reference may be made to the related descriptions of the embodiments shown in FIG. 4 and FIG. 5, and the same beneficial effects can be achieved. To avoid repetition, details are not described herein again.

FIG. 7 is a structural diagram of a terminal according to an embodiment of the present disclosure. As shown in FIG. 7, the terminal 500 includes:
a transmitting module 501, configured to transmit a path selection request to a network-side device, where the path selection request includes identification information of a candidate relay node;
a receiving module 502, configured to receive a response message transmitted by the network-side device; and
a first path selection module 503, configured to: in a case that the response message includes relay path indication information, use a target relay node to perform first transmission, where the relay path indication information includes identification information of the target relay node or configuration information of the candidate relay node, and the target relay node is a relay node, in the candidate relay node, whose configuration information matches a transmission parameter of the first transmission.

Optionally, the relay path indication information includes the configuration information of the candidate relay node, and the target relay node is a relay node selected by the terminal from the candidate relay node based on the configuration information of the candidate relay node and the transmission parameter of the first transmission.

Optionally, the path selection request further includes the transmission parameter of the first transmission; and
the configuration information of the candidate relay node is determined by the network-side device based on the transmission parameter of the first transmission.

Optionally, the path selection request further includes the transmission parameter of the first transmission; and
the relay path indication information includes the identification information of the target relay node, and the target relay node is a relay node selected by the network-side device from the candidate relay node based on the configuration information of the candidate relay node and the transmission parameter of the first transmission.

Optionally, if the number of relay nodes, in the candidate relay node, whose configuration information matches the transmission parameter of the first transmission is greater than 1, the relay path indication information includes:
identification information of a relay node that meets a preset condition among the relay nodes whose configuration information matches the transmission parameter of the first transmission, where the target relay node is the relay node that meets the preset condition; or
an identification information list of the relay nodes whose configuration information matches the transmission parameter of the first transmission, where sorting of the identification information list matches a configuration priority sequence of the relay nodes, and the target relay node is a relay node selected by the terminal based on the sorting of the identification information list.

Optionally, the terminal 500 further includes:
a second path selection module, configured to: in a case that the response message does not include the relay path indication information, use a direct path to perform the first transmission.

Optionally, the second path selection module is specifically configured to:
in a case that the response message does not include the relay path indication information but includes direct path indication information, use the direct path to perform the first transmission.

Optionally, the configuration information of the candidate relay node includes at least one of the following:
quality of service QoS information supported by the candidate relay node;
load information of a network to which the candidate relay node belongs;
network slice selection assistance information NSSAI of a network to which the candidate relay node belongs;
a session and service continuity SSC mode of a network to which the candidate relay node belongs;
information about a protocol data unit PDU session that the candidate relay node has established; and
moving track information of the candidate relay node.

Optionally, the transmission parameter of the first transmission includes at least one of the following:
an identifier of the first transmission;
QoS required for the first transmission;
NSSAI of the first transmission;
an SSC mode of the first transmission; and
a data network name DNN of the first transmission.

It should be noted that the terminal 500 in this embodiment of the present disclosure may be a terminal in any implementation of the method embodiments. Any implementation of the terminal in the method embodiments can be implemented by the terminal 500 in this embodiment of the present disclosure, with the same beneficial effects achieved. To avoid repetition, details are not described herein again.

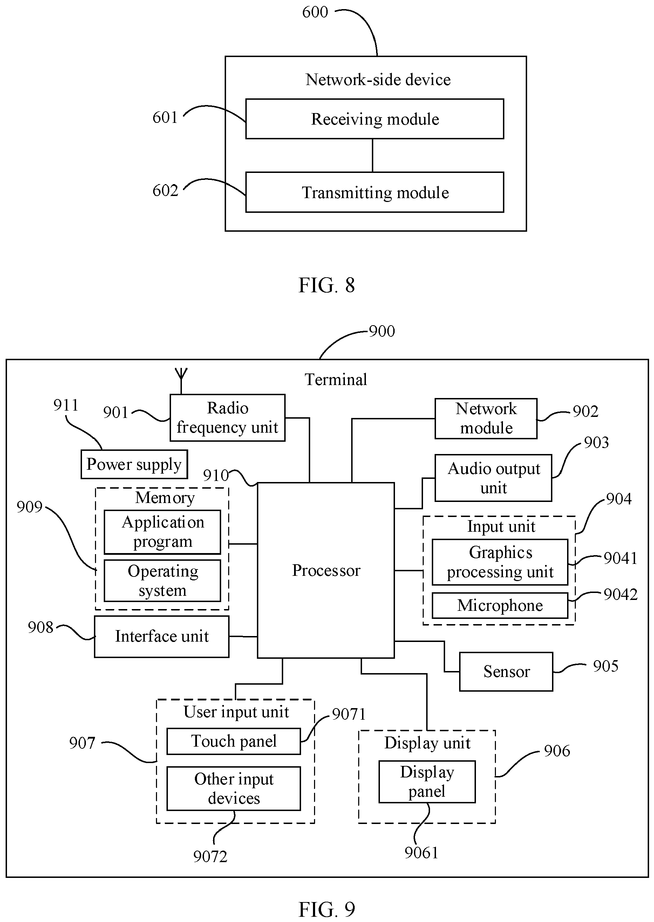

FIG. 8 is a structural diagram of a network-side device according to an embodiment of the present disclosure. As shown in FIG. 8, the network-side device 600 includes:
a receiving module 601, configured to receive a path selection request transmitted by a terminal, where the path selection request includes identification information of a candidate relay node; and
a transmitting module 602, configured to transmit a response message to the terminal, where the response message includes relay path indication information, the relay path indication information includes identification information of a target relay node or configuration information of the candidate relay node, and the target relay node is a relay node, in the candidate relay node, whose configuration information matches a transmission parameter used by the terminal to perform first transmission; or the response message does not include the relay path indication information.

Optionally, in a case that configuration information of none of the candidate relay node meets the transmission parameter of the first transmission, the response message does not include the relay path indication information.

Optionally, in a case that the response message does not include the relay path indication information, the response message further includes direct path indication information.

Optionally, the relay path indication information includes the configuration information of the candidate relay node, and the target relay node is a relay node selected by the terminal from the candidate relay node based on the configuration information of the candidate relay node and the transmission parameter of the first transmission.

Optionally, the path selection request further includes the transmission parameter of the first transmission; and
the configuration information of the candidate relay node is determined by the network-side device based on the transmission parameter of the first transmission.

Optionally, the path selection request further includes the transmission parameter of the first transmission; and
the relay path indication information includes the identification information of the target relay node, and the target relay node is a relay node selected by the network-side device from the candidate relay node based on the configuration information of the candidate relay node and the transmission parameter of the first transmission.

Optionally, if the number of relay nodes, in the candidate relay node, whose configuration information matches the transmission parameter of the first transmission is greater than 1, the relay path indication information includes:
identification information of a relay node that meets a preset condition among the relay nodes whose configuration information matches the transmission parameter of the first transmission, where the target relay node is the relay node that meets the preset condition; or
an identification information list of the relay nodes whose configuration information matches the transmission parameter of the first transmission, where sorting of the identification information list matches a configuration priority sequence of the relay nodes, and the target relay node is a relay node selected by the terminal based on the sorting of the identification information list.

Optionally, the configuration information of the candidate relay node includes at least one of the following:
quality of service QoS information supported by the candidate relay node;
load information of a network to which the candidate relay node belongs;
network slice selection assistance information NSSAI of a network to which the candidate relay node belongs;
a session and service continuity SSC mode of a network to which the candidate relay node belongs;
information about a protocol data unit PDU session that the candidate relay node has established; and
moving track information of the candidate relay node.

Optionally, the transmission parameter of the first transmission includes at least one of the following:
an identifier of the first transmission;
QoS required for the first transmission;
NSSAI of the first transmission;
an SSC mode of the first transmission; and
a data network name DNN of the first transmission.

It should be noted that the network-side device 600 in this embodiment of the present disclosure may be a network-side device in any implementation of the method embodiments. Any implementation of the network-side device in the method embodiments can be implemented by the network-side device 600 in this embodiment of the present disclosure, with the same beneficial effects achieved. To avoid repetition, details are not described herein again.

FIG. 9 is a schematic diagram of a hardware structure of a terminal for implementing the embodiments of the present disclosure. The terminal 900 includes but is not limited to components such as a radio frequency unit 901, a network module 902, an audio output unit 903, an input unit 904, a sensor 905, a display unit 906, a user input unit 907, an interface unit 908, a memory 909, a processor 910, and a power supply 911. A person skilled in the art can understand that the terminal structure shown in FIG. 9 does not constitute a limitation on the terminal. The terminal may include more or fewer components than those shown in the figure, or some components may be combined, or there may be a different component layout. In this embodiment of the present disclosure, the terminal includes but is not limited to a mobile phone, a tablet computer, a notebook computer, a palmtop computer, a vehicle-mounted terminal, a wearable device, a pedometer, or the like.

The radio frequency unit 901 is configured to:
transmit a path selection request to a network-side device, where the path selection request includes identification information of a candidate relay node;
receive a response message transmitted by the network-side device; and
in a case that the response message includes relay path indication information, use a target relay node to perform first transmission, where the relay path indication information includes identification information of the target relay node or configuration information of the candidate relay node, and the target relay node is a relay node, in the candidate relay node, whose configuration information matches a transmission parameter of the first transmission.

Optionally, the relay path indication information includes the configuration information of the candidate relay node, and the target relay node is a relay node selected by the terminal from the candidate relay node based on the configuration information of the candidate relay node and the transmission parameter of the first transmission.

Optionally, the path selection request further includes the transmission parameter of the first transmission; and
the configuration information of the candidate relay node is determined by the network-side device based on the transmission parameter of the first transmission.

Optionally, the path selection request further includes the transmission parameter of the first transmission; and
the relay path indication information includes the identification information of the target relay node, and the target relay node is a relay node selected by the network-side device from the candidate relay node based on the configuration information of the candidate relay node and the transmission parameter of the first transmission.

Optionally, if the number of relay nodes, in the candidate relay node, whose configuration information matches the transmission parameter of the first transmission is greater than 1, the relay path indication information includes:
identification information of a relay node that meets a preset condition among the relay nodes whose configuration information matches the transmission parameter of the first transmission, where the target relay node is the relay node that meets the preset condition; or
an identification information list of the relay nodes whose configuration information matches the transmission parameter of the first transmission, where sorting of the identification information list matches a configuration priority sequence of the relay nodes, and the target relay node is a relay node selected by the terminal based on the sorting of the identification information list.

Optionally, the radio frequency unit 901 is further configured to:
in a case that the response message does not include the relay path indication information, use a direct path to perform the first transmission.

Optionally, the radio frequency unit 901 is further configured to:
in a case that the response message does not include the relay path indication information but includes direct path indication information, use the direct path to perform the first transmission.

Optionally, the configuration information of the candidate relay node includes at least one of the following:
quality of service QoS information supported by the candidate relay node;
load information of a network to which the candidate relay node belongs;
network slice selection assistance information NSSAI of a network to which the candidate relay node belongs;
a session and service continuity SSC mode of a network to which the candidate relay node belongs;
information about a protocol data unit PDU session that the candidate relay node has established; and
moving track information of the candidate relay node.

Optionally, the transmission parameter of the first transmission includes at least one of the following:
an identifier of the first transmission;
QoS required for the first transmission;
NSSAI of the first transmission;
an SSC mode of the first transmission; and
a data network name DNN of the first transmission.

In this embodiment of the present disclosure, the terminal may transmit the path selection request to the network-side device after discovering the candidate relay node, and the network-side device may feed back the response message to the terminal after receiving the path selection request, to assist the terminal in path selection. In this way, with the assistance of the network-side device, a path selected by the terminal can better meet a transmission requirement, namely, a service requirement, thereby improving applicability of path selection.

It should be understood that in this embodiment of the present disclosure, the radio frequency unit 901 may be configured to receive and transmit signals in an information reception or transmission or call process. Specifically, after receiving downlink data from a base station, the radio frequency unit 901 transmits the downlink data to the processor 910 for processing, and in addition, transmits uplink data to the base station. Usually, the radio frequency unit 901 includes but is not limited to an antenna, at least one amplifier, a transceiver, a coupler, a low noise amplifier, a duplexer, and the like. In addition, the radio frequency unit 901 may further communicate with a network and another device by using a wireless communications system.

The terminal provides wireless broadband Internet access for a user by using the network module 902, for example, helps the user transmit and receive e-mails, browse web pages, and access streaming media.

The audio output unit 903 may convert audio data received by the radio frequency unit 901 or the network module 902 or stored in the memory 909 into an audio signal and output the audio signal as a sound. In addition, the audio output unit 903 may further provide audio output (for example, a call signal reception sound or a message reception sound) associated with a specific function performed by the terminal 900. The audio output unit 903 includes a speaker, a buzzer, a receiver, and the like.

The input unit 904 is configured to receive an audio or video signal. The input unit 904 may include a graphics processing unit (Graphics Processing Unit, GPU) 9041 and a microphone 9042. The graphics processing unit 9041 processes image data of a static picture or a video that is obtained by an image capture apparatus (for example, a camera) in a video capture mode or an image capture mode. A processed image frame may be displayed on the display unit 906. The image frame processed by the graphics processing unit 9041 may be stored in the memory 909(or another storage medium) or transmitted by the radio frequency unit 901 or the network module 902. The microphone 9042 may receive sounds and process such sounds into audio data. The processed audio data may be converted in a telephone call mode into a format that can be transmitted by the radio frequency unit 901 to a mobile communications base station, for outputting.

The terminal 900 further includes at least one sensor 905, for example, an optical sensor, a motion sensor, and another sensor. Specifically, the optical sensor includes an ambient light sensor and a proximity sensor. The ambient light sensor may adjust luminance of a display panel 9061 based on brightness of ambient light, and the proximity sensor may turn off the display panel 9061 and backlight when the terminal 900 moves to an ear. As a motion sensor, an accelerometer sensor may detect magnitudes of accelerations in all directions (usually three axes), may detect a magnitude and a direction of gravity when the terminal is still, and may be applied to posture recognition (for example, landscape/portrait mode switching, a related game, or magnetometer posture calibration) of the terminal, a function associated with vibration recognition (for example, a pedometer or a keystroke), or the like. The sensor 905 may further include a fingerprint sensor, a pressure sensor, an iris sensor, a molecular sensor, a gyroscope, a barometer, a hygrometer, a thermometer, an infrared sensor, or the like. Details are not described herein.

The display unit 906 is configured to display information entered by the user or information provided for the user. The display unit 906 may include the display panel 9061, and the display panel 9061 may be configured in a form of a liquid crystal display (Liquid Crystal Display, LCD), an organic light-emitting diode (Organic Light-Emitting Diode, OLED), or the like.

The user input unit 907 may be configured to receive input digit or character information and generate key signal input associated with user setting and function control of the terminal. Specifically, the user input unit 907 includes a touch panel 9071 and other input devices 9072. The touch panel 9071 is also referred to as a touchscreen, and may collect a touch operation of the user on or near the touch panel (for example, an operation performed on or near the touch panel 9071 by the user by using any appropriate object or accessory such as a finger or a stylus). The touch panel 9071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into contact coordinates, transmits the contact coordinates to the processor 910, receives a command transmitted by the processor 910, and executes the command. In addition, the touch panel 9071 may be implemented in a plurality of types, for example, a resistive type, a capacitive type, an infrared type, and a surface acoustic wave type. In addition to the touch panel 9071, the user input unit 907 may further include the other input devices 9072. Specifically, the other input devices 9072 may include but are not limited to a physical keyboard, a function key (such as a volume control key or an on/off key), a trackball, a mouse, and a joystick. Details are not described herein.

Further, the touch panel 9071 may cover the display panel 9071. After detecting a touch operation on or near the touch panel 9071, the touch panel 9071 transmits the touch operation to the processor 910 to determine a type of a touch event. Then the processor 910 provides corresponding visual output on the display panel 9061 based on the type of the touch event. In FIG. 9, the touch panel 9071 and the display panel 9061 serve as two separate components to implement input and output functions of the terminal. However, in some embodiments, the touch panel 9071 and the display panel 9061 may be integrated to implement the input and output functions of the terminal. This is not specifically limited herein.

The interface unit 908 is an interface for connecting an external apparatus to the terminal 900. For example, the external apparatus may include a wired or wireless headset port, an external power (or battery charger) port, a wired or wireless data port, a memory card port, a port for connecting an apparatus having an identification module, an audio input/output (I/O) port, a video I/O port, an earphone port, and the like. The interface unit 908 may be configured to receive input (for example, data information and electric power) from the external apparatus, and transmit the received input to one or more elements in the terminal 900; or may be configured to transmit data between the terminal 900 and the external apparatus.

The memory 909 may be configured to store software programs and various data. The memory 909 may mainly include a program storage region and a data storage region. The program storage region may store an operating system, an application program required by at least one function (for example, an audio play function or an image play function), and the like. The data storage region may store data (for example, audio data or a phone book) created based on usage of the mobile phone. In addition, the memory 909 may include a high-speed random access memory, or may include a nonvolatile memory, for example, at least one magnetic disk storage device or a flash memory device, or another volatile solid-state storage device.

The processor 910 is a control center of the terminal that connects various parts of the entire terminal by using various interfaces or lines. The processor 910 performs various functions of the terminal and processes data by running or executing software programs and modules stored in the memory 909 and calling data stored in the memory 909, so as to perform overall monitoring on the terminal. The processor 910 may include one or more processing units. For example, the processor 910 may integrate an application processor and a modem processor. The application processor mainly processes the operating system, a user interface, an application program, and the like. The modem processor mainly processes wireless communication. It can be understood that the modem processor may be alternatively not integrated in the processor 910.

The terminal 900 may further include a power supply 911(for example, a battery) that supplies power to each component. For example, the power supply 911 may be logically connected to the processor 910 by using a power management system, so as to implement functions such as charging management, discharging management, and power consumption management by using the power management system.

In addition, the terminal 900 includes some functional modules that are not shown. Details are not described herein.

For example, an embodiment of the present disclosure further provides a terminal, including a processor 910, a memory 909, and a computer program stored in the memory 909 and capable of running on the processor 910. When the computer program is executed by the processor 910, the processes of the path selection method embodiment are implemented, with the same technical effects achieved. To avoid repetition, details are not described herein again.

It should be noted that the terminal 900 in this embodiment of the present disclosure may be a terminal in any implementation of the method embodiments in the embodiments of the present disclosure. Any implementation of the terminal in the method embodiments in the embodiments of the present disclosure can be implemented by the terminal 900 in this embodiment, with the same beneficial effects achieved. Details are not described herein again.

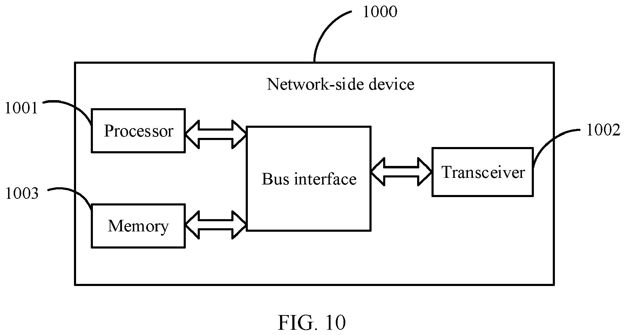

FIG. 10 is a structural diagram of a network-side device according to an embodiment of the present disclosure. As shown in FIG. 10, the network-side device 1000 includes a processor 1001, a transceiver 1002, a memory 1003, and a bus interface.

The transceiver 1002 is configured to:
receive a path selection request transmitted by a terminal, where the path selection request includes identification information of a candidate relay node; and
transmit a response message to the terminal, where the response message includes relay path indication information, the relay path indication information includes identification information of a target relay node or configuration information of the candidate relay node, and the target relay node is a relay node, in the candidate relay node, whose configuration information matches a transmission parameter used by the terminal to perform first transmission; or the response message does not include the relay path indication information.

Optionally, in a case that configuration information of none of the candidate relay node meets the transmission parameter of the first transmission, the response message does not include the relay path indication information.

Optionally, in a case that the response message does not include the relay path indication information, the response message further includes direct path indication information.

Optionally, the relay path indication information includes the configuration information of the candidate relay node, and the target relay node is a relay node selected by the terminal from the candidate relay node based on the configuration information of the candidate relay node and the transmission parameter of the first transmission.

Optionally, the path selection request further includes the transmission parameter of the first transmission; and
the configuration information of the candidate relay node is determined by the network-side device based on the transmission parameter of the first transmission.

Optionally, the path selection request further includes the transmission parameter of the first transmission; and
the relay path indication information includes the identification information of the target relay node, and the target relay node is a relay node selected by the network-side device from the candidate relay node based on the configuration information of the candidate relay node and the transmission parameter of the first transmission.

Optionally, if the number of relay nodes, in the candidate relay node, whose configuration information matches the transmission parameter of the first transmission is greater than 1, the relay path indication information includes:
identification information of a relay node that meets a preset condition among the relay nodes whose configuration information matches the transmission parameter of the first transmission, where the target relay node is the relay node that meets the preset condition; or
an identification information list of the relay nodes whose configuration information matches the transmission parameter of the first transmission, where sorting of the identification information list matches a configuration priority sequence of the relay nodes, and the target relay node is a relay node selected by the terminal based on the sorting of the identification information list.

Optionally, the configuration information of the candidate relay node includes at least one of the following:
quality of service QoS information supported by the candidate relay node;
load information of a network to which the candidate relay node belongs;
network slice selection assistance information NSSAI of a network to which the candidate relay node belongs;
a session and service continuity SSC mode of a network to which the candidate relay node belongs;
information about a protocol data unit PDU session that the candidate relay node has established; and
moving track information of the candidate relay node.

Optionally, the transmission parameter of the first transmission includes at least one of the following:
an identifier of the first transmission;
QoS required for the first transmission;
NSSAI of the first transmission;
an SSC mode of the first transmission; and
a data network name DNN of the first transmission.

In this embodiment of the present disclosure, the terminal may transmit the path selection request to the network-side device after discovering the candidate relay node, and the network-side device may feed back the response message to the terminal after receiving the path selection request, to assist the terminal in path selection. In this way, with the assistance of the network-side device, a path selected by the terminal can better meet a transmission requirement, namely, a service requirement, thereby improving applicability of path selection.

In FIG. 10, a bus architecture may include any quantity of interconnected buses and bridges, and specifically connect together various circuits of one or more processors represented by the processor 1001 and a memory represented by the memory 1003. The bus architecture may further interconnect various other circuits such as a peripheral device, a voltage regulator, and a power management circuit. These are all well known in the art, and therefore are not further described in this specification. The bus interface provides an interface. The transceiver 1002 may be a plurality of components, including a transmitter and a receiver, and provides units for communicating with a variety of other apparatuses on a transmission medium. For different terminals, the user interface 1004 may be alternatively an interface that can be externally or internally connected to a required device. The connected device includes but is not limited to a keypad, a display, a speaker, a microphone, a joystick, and the like.

The processor 1001 is responsible for management of the bus architecture and general processing, and the memory 1003 may store data for use by the processor 1001 when the processor 1001 performs an operation.

It should be noted that the network-side device 1000 in this embodiment may be a network-side device in any implementation of the method embodiments in the embodiments of the present disclosure. Any implementation of the network-side device in the method embodiments in the embodiments of the present disclosure can be implemented by the network-side device 1000 in this embodiment, with the same beneficial effects achieved. Details are not described herein again.

An embodiment of the present disclosure further provides a computer-readable storage medium, where the computer-readable storage medium stores a computer program. When the computer program is executed by a processor, the processes of the embodiments corresponding to the terminal or the network side are implemented, with the same technical effects achieved. To avoid repetition, details are not described herein again. For example, the computer-readable storage medium is a read-only memory (Read-Only Memory, ROM), a random access memory (Random Access Memory, RAM), a magnetic disk, an optical disk, or the like.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may be alternatively implemented by using hardware. However, in most cases, the former is a preferred implementation. Based on such an understanding, the technical solutions of the present disclosure essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present disclosure.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A path selection method, applied to a terminal and comprising:
transmitting a path selection request to a network-side device, wherein the path selection request comprises identification information of a candidate relay node;
receiving a response message transmitted by the network-side device; and
in a case that the response message comprises relay path indication information, using a target relay node to perform first transmission, wherein the relay path indication information comprises identification information of the target relay node or configuration information of the candidate relay node, and the target relay node is a relay node, in the candidate relay node, whose configuration information matches a transmission parameter of the first transmission.

2. The method according to claim 1, wherein the relay path indication information comprises the configuration information of the candidate relay node, and the target relay node is a relay node selected by the terminal from the candidate relay node based on the configuration information of the candidate relay node and the transmission parameter of the first transmission.

3. The method according to claim 2, wherein the path selection request further comprises the transmission parameter of the first transmission; and
the configuration information of the candidate relay node is determined by the network-side device based on the transmission parameter of the first transmission.

4. The method according to claim 1, wherein the path selection request further comprises the transmission parameter of the first transmission; and
the relay path indication information comprises the identification information of the target relay node, and the target relay node is a relay node selected by the network-side device from the candidate relay node based on the configuration information of the candidate relay node and the transmission parameter of the first transmission.

5. The method according to claim 4, wherein if the number of relay nodes, in the candidate relay node, whose configuration information matches the transmission parameter of the first transmission is greater than 1, the relay path indication information comprises:
identification information of a relay node that meets a preset condition among the relay nodes whose configuration information matches the transmission parameter of the first transmission, wherein the target relay node is the relay node that meets the preset condition; or
an identification information list of the relay nodes whose configuration information matches the transmission parameter of the first transmission, wherein sorting of the identification information list matches a configuration priority sequence of the relay nodes, and the target relay node is a relay node selected by the terminal based on the sorting of the identification information list.

6. The method according to claim 1, further comprising:
in a case that the response message does not comprise the relay path indication information, using a direct path to perform the first transmission.

7. The method according to claim 6, wherein the using, in a case that the response message does not comprise the relay path indication information, a direct path to perform the first transmission comprises:
in a case that the response message does not comprise the relay path indication information but comprises direct path indication information, using the direct path to perform the first transmission.

8. The method according to claim 1, wherein the configuration information of the candidate relay node comprises at least one of the following:
quality of service QoS information supported by the candidate relay node;
load information of a network to which the candidate relay node belongs;
network slice selection assistance information NSSAI of a network to which the candidate relay node belongs;
a session and service continuity SSC mode of a network to which the candidate relay node belongs;
information about a protocol data unit PDU session that the candidate relay node has established; and
moving track information of the candidate relay node.

9. The method according to claim 1, wherein the transmission parameter of the first transmission comprises at least one of the following:
an identifier of the first transmission;
QoS required for the first transmission;
NSSAI of the first transmission;
an SSC mode of the first transmission; and
a data network name DNN of the first transmission.

10. A path selection method, applied to a network-side device and comprising:
receiving a path selection request transmitted by a terminal, wherein the path selection request comprises identification information of a candidate relay node; and
transmitting a response message to the terminal, wherein the response message comprises relay path indication information, the relay path indication information comprises identification information of a target relay node or configuration information of the candidate relay node, and the target relay node is a relay node, in the candidate relay node, whose configuration information matches a transmission parameter used by the terminal to perform first transmission; or the response message does not comprise the relay path indication information.

11. The method according to claim 10, wherein in a case that configuration information of none of the candidate relay node meets the transmission parameter of the first transmission, the response message does not comprise the relay path indication information.

12. The method according to claim 10 or 11, wherein in a case that the response message does not comprise the relay path indication information, the response message further comprises direct path indication information.

13. The method according to claim 10, wherein the relay path indication information comprises the configuration information of the candidate relay node, and the target relay node is a relay node selected by the terminal from the candidate relay node based on the configuration information of the candidate relay node and the transmission parameter of the first transmission.

14. The method according to claim 13, wherein the path selection request further comprises the transmission parameter of the first transmission; and
the configuration information of the candidate relay node is determined by the network-side device based on the transmission parameter of the first transmission.

15. The method according to claim 10, wherein the path selection request further comprises the transmission parameter of the first transmission; and
the relay path indication information comprises the identification information of the target relay node, and the target relay node is a relay node selected by the network-side device from the candidate relay node based on the configuration information of the candidate relay node and the transmission parameter of the first transmission.

16. The method according to claim 15, wherein if the number of relay nodes, in the candidate relay node, whose configuration information matches the transmission parameter of the first transmission is greater than 1, the relay path indication information comprises:
identification information of a relay node that meets a preset condition among the relay nodes whose configuration information matches the transmission parameter of the first transmission, wherein the target relay node is the relay node that meets the preset condition; or
an identification information list of the relay nodes whose configuration information matches the transmission parameter of the first transmission, wherein sorting of the identification information list matches a configuration priority sequence of the relay nodes, and the target relay node is a relay node selected by the terminal based on the sorting of the identification information list.

17. The method according to claim 10, wherein the configuration information of the candidate relay node comprises at least one of the following:
quality of service QoS information supported by the candidate relay node;
load information of a network to which the candidate relay node belongs;
network slice selection assistance information NSSAI of a network to which the candidate relay node belongs;
a session and service continuity SSC mode of a network to which the candidate relay node belongs;
information about a protocol data unit PDU session that the candidate relay node has established; and
moving track information of the candidate relay node.

18. The method according to claim 10, wherein the transmission parameter of the first transmission comprises at least one of the following:
an identifier of the first transmission;
QoS required for the first transmission;
NSSAI of the first transmission;
an SSC mode of the first transmission; and
a data network name DNN of the first transmission.

19. A terminal, comprising:
a transmitting module, configured to transmit a path selection request to a network-side device, wherein the path selection request comprises identification information of a candidate relay node;
a receiving module, configured to receive a response message transmitted by the network-side device; and
a first path selection module, configured to: in a case that the response message comprises relay path indication information, use a target relay node to perform first transmission, wherein the relay path indication information comprises identification information of the target relay node or configuration information of the candidate relay node, and the target relay node is a relay node, in the candidate relay node, whose configuration information matches a transmission parameter of the first transmission.

20. The terminal according to claim 19, wherein the relay path indication information comprises the configuration information of the candidate relay node, and the target relay node is a relay node selected by the terminal from the candidate relay node based on the configuration information of the candidate relay node and the transmission parameter of the first transmission.

21. The terminal according to claim 20, wherein the path selection request further comprises the transmission parameter of the first transmission; and
the configuration information of the candidate relay node is determined by the network-side device based on the transmission parameter of the first transmission.

22. The terminal according to claim 19, wherein the path selection request further comprises the transmission parameter of the first transmission; and
the relay path indication information comprises the identification information of the target relay node, and the target relay node is a relay node selected by the network-side device from the candidate relay node based on the configuration information of the candidate relay node and the transmission parameter of the first transmission.

23. The terminal according to claim 22, wherein if the number of relay nodes, in the candidate relay node, whose configuration information matches the transmission parameter of the first transmission is greater than 1, the relay path indication information comprises:
identification information of a relay node that meets a preset condition among the relay nodes whose configuration information matches the transmission parameter of the first transmission, wherein the target relay node is the relay node that meets the preset condition; or
an identification information list of the relay nodes whose configuration information matches the transmission parameter of the first transmission, wherein sorting of the identification information list matches a configuration priority sequence of the relay nodes, and the target relay node is a relay node selected by the terminal based on the sorting of the identification information list.

24. The terminal according to claim 19, further comprising:
a second path selection module, configured to: in a case that the response message does not comprise the relay path indication information, use a direct path to perform the first transmission.

25. A network-side device, comprising:
a receiving module, configured to receive a path selection request transmitted by a terminal, wherein the path selection request comprises identification information of a candidate relay node; and
a transmitting module, configured to transmit a response message to the terminal, wherein the response message comprises relay path indication information, the relay path indication information comprises identification information of a target relay node or configuration information of the candidate relay node, and the target relay node is a relay node, in the candidate relay node, whose configuration information matches a transmission parameter used by the terminal to perform first transmission; or the response message does not comprise the relay path indication information.

26. A terminal, comprising a memory, a processor, and a computer program stored in the memory and capable of running on the processor, wherein when the computer program is executed by the processor, the steps of the path selection method according to any one of claims 1 to 9 are implemented.

27. A network-side device, comprising a memory, a processor, and a computer program stored in the memory and capable of running on the processor, wherein when the computer program is executed by the processor, the steps of the path selection method according to any one of claims 10 to 18 are implemented.

28. A computer-readable storage medium, wherein the computer-readable storage medium stores a computer program, and when the computer program is executed by a processor, the steps of the path selection method according to any one of claims 1 to 9 are implemented, or the steps of the path selection method according to any one of claims 10 to 18 are implemented.
